# FASCICULE DE BREVET EUROPEEN

(11) **EP 0 909 010 B1**
(45) Date de publication et mention de la délivrance du brevet: **08.06.2005**
(21) Numéro de dépôt: 98402472.9
(22) Date de dépôt: 06.10.1998
(51) Int. Cl.: H02K 21/38, H02K 21/04, H02K 19/24

(54) **Machine électrique à commutation de flux, et notamment alternateur de véhicule automobile**
Elektrische Maschine mit Flussumschaltung, insbesondere Stromgenerator für Kraftfahrzeuge
Electrical machine with flux commutation, particularly alternator for vehicle

(30) Priorité: 07.10.1997 FR 9712471
(43) Date de publication de la demande: 14.04.1999
(73) Titulaire: VALEO EQUIPEMENTS ELECTRIQUES MOTEUR, 94000 Créteil (FR)
(72) Inventeur: Akemakou, Dokou Antoine, 94400 Vitry sur seine (FR)
(74) Mandataire: Le Forestier, Eric

(56) Documents cités:
- EP-A- 0 394 527
- WO-A-94/19855
- FR-A- 397 271
- PATENT ABSTRACTS OF JAPAN vol. 003, no. 139 (E-152), 17 novembre 1979 & JP 54 116610 A (HITACHI LTD), 11 septembre 1979

## Description

La présente invention a trait d'une façon générale aux machines tournantes telles que les alternateurs pour véhicules automobiles.

La génératrice polyphasée que constitue un alternateur classique de véhicule automobile comporte généralement un stator à l'intérieur duquel tourne un rotor pourvu d'un bobinage d'excitation. Ce bobinage est alimenté par des balais en contact avec deux bagues collectrices prévues sur une partie en saillie de l'arbre du rotor.

Le recours à des balais présente toutefois des inconvénients, parmi lesquelles la nécessité d'une longueur axiale importante de l'alternateur, un ensemble de balais et de collecteurs qui accroissent le coût de revient, ainsi que les défauts de fonctionnement engendrés, notamment du fait de l'usure, par un contact défaillant entre les balais et les bagues collectrices.

Il existe dans l'état de la technique certaines propositions visant à réaliser des machines tournantes, pouvant convenir comme alternateurs de véhicules automobiles, qui soient dépourvues de balais.

Ainsi l'on connaît un alternateur dans lequel les griffes des deux roues polaires du rotor, qui normalement s'interpénètrent, sont tronquées de manière à permettre le passage, dans un plan transversal, d'un support pour un bobinage d'excitation fixe disposé à l'intérieur des roues polaires. Cette approche se fait toutefois au détriment du rendement de la machine, car les surfaces d'entrefer sont alors très sensiblement diminuées. En outre, une machine de ce type, pour une courbe débit/vitesse donnée, est sensiblement plus lourde qu'une machine classique, ce qui est particulièrement désavantageux dans le cas des alternateurs embarqués.

On connaît également un alternateur dans lequel deux roues polaires à griffes imbriquées sont montées en porte-à-faux, à partir d'une extrémité axiale de la machine, entre un bobinage d'excitation fixe, interne, et des bobinages de stator externes.

Cette solution connue présente également des inconvénients, notamment par le fait que la dimension axiale de la machine est nécessairement accrue, ainsi que son poids. En outre, l'accroissement des entrefers au niveau du rotor diminue le rendement de la machine.

Par ailleurs, dans les deux cas évoqués ci-dessus, la conception de la machine nécessite impérativement de prendre en compte les phénomènes électromagnétiques non seulement dans le plan perpendiculaire à l'axe de rotation, c'est-à-dire dans deux dimensions, mais également dans la direction de cet axe, c'est-à-dire dans la troisième dimension de l'espace.

Cette nécessité d'une conception tridimensionnelle de la machine rend la modélisation et l'optimisation des différents paramètres extrêmement délicates et fastidieuses.

Enfin on connaît en particulier par le document EP-0 707 374 une structure à commutation de flux, dépourvue de balais, qui présente l'avantage de pouvoir être plus aisément modélisée et optimisée de façon purement bidimensionnelle.

Cette structure connue présente toutefois certains inconvénients lorsqu'elle est excitée soit uniquement par des aimants, soit par des aimants associés à des bobinages d'excitation. En particulier, dans le premier cas le fait que le flux magnétique à partir duquel le courant d'induit est engendré soit obtenu uniquement par des aimants permanents ne permet aucun contrôle de l'excitation de la machine. Une telle machine peut donc difficilement convenir pour des alternateurs de véhicules automobiles, dont la vitesse de rotation peut être extrêmement variable. Une solution connue dans ce cas est d'utiliser des composants électroniques de puissance pour maintenir la tension de sortie à une valeur fixe d'environ 14 volts. Compte-tenu des forts courants mis en jeu, cette solution est encombrante et onéreuse. En outre, la régulation de courant au niveau du stator est inintéressante sur le plan du bilan énergétique, car elle implique une dissipation en pure perte d'une partie de la puissance électrique engendrée par l'alternateur.

Dans le second cas, une solution connue à ce problème consiste à contrôler le courant délivré par l'induit au niveau du ou des bobinages d'excitation par commutation. L'inversion du courant d'excitation servant à diminuer le flux des aimants aux grandes vitesses. Or du fait que le courant d'excitation est par nature, dans ce type de machine, un courant alternatif bidirectionnel, une telle commutation nécessiterait le recours à un pont de commutation en "H", dont le coût est élevé.

Par ailleurs, si l'on envisageait de combiner à ce flux magnétique d'excitation créé par aimants permanents un flux d'excitation complémentaire créé par des bobinages, alors se poserait le problème de l'obtention d'un courant d'induit nul ou sensiblement nul, qui est souhaitable notamment lors d'un délestage de charge au niveau des équipements électriques alimentés par l'alternateur.

On connaît par ailleurs d'après le document EP-A-0 394 527 une machine synchrone à excitation hétéropolaire, basée sur le principe de la réluctance variable, qui permet de combiner une excitation à aimants et une excitation à bobinages pour faire varier l'excitation entre une valeur essentiellement nulle et une valeur maximale. Toutefois, une telle machine engendre par nature dans les bobinages d'induit un flux qui est toujours dirigé dans le même sens. Le fer est ainsi utilisé de façon non optimale : à limitation égale en saturation, la variation de flux utile est réduite dans un rapport de 1,15 à 1,2 environ par rapport aux machines classiques et à commutation de flux, ce qui oblige à rajouter des conducteurs d'induit, donc à surdimensionner la machine.

La présente invention vise à pallier ces inconvénients et à proposer une machine tournante, en particulier un alternateur, dans laquelle la régulation du courant délivré puisse s'effectuer en jouant sur l'excitation, et dans laquelle, malgré le recours à des aimants permanents pour effectuer cette excitation, celle-ci puisse être variée entre une excitation nulle ou essentiellement nulle et une excitation maximale.

Un autre objet de l'invention est de réaliser une machine dans laquelle l'excitation varie dans les limites précitées grâce à l'application d'un courant d'excitation qui varie lui aussi entre une valeur nulle et une valeur maximale.

Ainsi la présente invention propose une machine électrique comportant un stator et un rotor, le stator comportant sur sa face interne au moins un bobinage d'induit logé dans une paire d'encoches, et comportant en outre une série de logements pour des moyens d'excitation, le rotor étant dépourvu de bobinage et comportant une pluralité de dents aptes à sélectivement établir des flux magnétiques variables dans les bobinages d'induits, et les moyens d'excitation comprenant au moins un aimant permanent apte à établir un flux magnétique se bouclant sur lui même dans une direction circonférentielle du stator et au moins un bobinage d'excitation apte à établir localement un flux magnétique réglable dans une direction circonférentielle inverse de celle du flux produit par le ou les aimants, machine caractérisée en ce que les dents de rotor sont agencées de façon à effectuer au niveau du stator une commutation de flux, et en ce que le ou chaque aimant permanent (214) occupe une position angulaire située entre les positions angulaires des deux brins d'un même bobinage d'induit (213 ; 213a-213c), de manière à engendrer dans le ou les bobinages d'induit lors de la rotation du rotor un flux magnétique alternatif.

Des aspects préférés, mais non limitatifs, de la machine selon l'invention sont les suivants :
- le stator comporte le long de sa périphérie une alternance d'une pluralité d'aimants permanents et de bobinages d'excitation.
- le ou chaque aimant permanent s'étend sensiblement sur toute la dimension radiale du stator.
- le stator comporte une carcasse unique dans laquelle est prévue une encoche profonde en association avec le ou chaque aimant permanent.
- le stator comporte plusieurs parties de carcasse réunies les unes aux autres par plusieurs aimants permanents.
- le ou chaque bobinage d'excitation est disposé dans deux encoches prévues respectivement dans la surface interne et dans la surface externe du stator.
- la machine comprend un même nombre d'aimants permanents, de bobinages d'excitation et de bobinages d'induit, régulièrement répartis sur la circonférence du stator.
- les dents de commutation du flux du rotor présentent une répartition angulaire différente de celle des bobinages d'induit, de manière à opérer avec des courants polyphasés dans les différents bobinages d'induits.
- la machine comprend des moyens pour établir à l'aide du ou des bobinages d'excitation un champ magnétique inverse de magnétisation ou de remagnétisation du ou des aimants permanents.
- la machine constitue un alternateur de véhicule automobile.

D'autres aspects, buts et avantages de la présente invention apparaîtront mieux à la lecture de la description détaillée suivante d'une forme de réalisation préférée de celle-ci, donnée à titre d'exemple et faite en référence aux dessins annexés, sur lesquels :
la figure 1 est une vue schématique en coupe transversale d'un ensemble de rotor et de stator d'une machine tournante selon une forme de réalisation simplifiée de l'invention, dans un premier état,
la figure 2a illustre la machine de la figure 1 dans un second état et dans une première position du rotor,
la figure 2b illustre la même machine dans ce même second état et dans une seconde position du rotor, et
la figure 3 est une vue en coupe transversale d'un ensemble de rotor et de stator d'une machine triphasée réalisée selon l'invention.

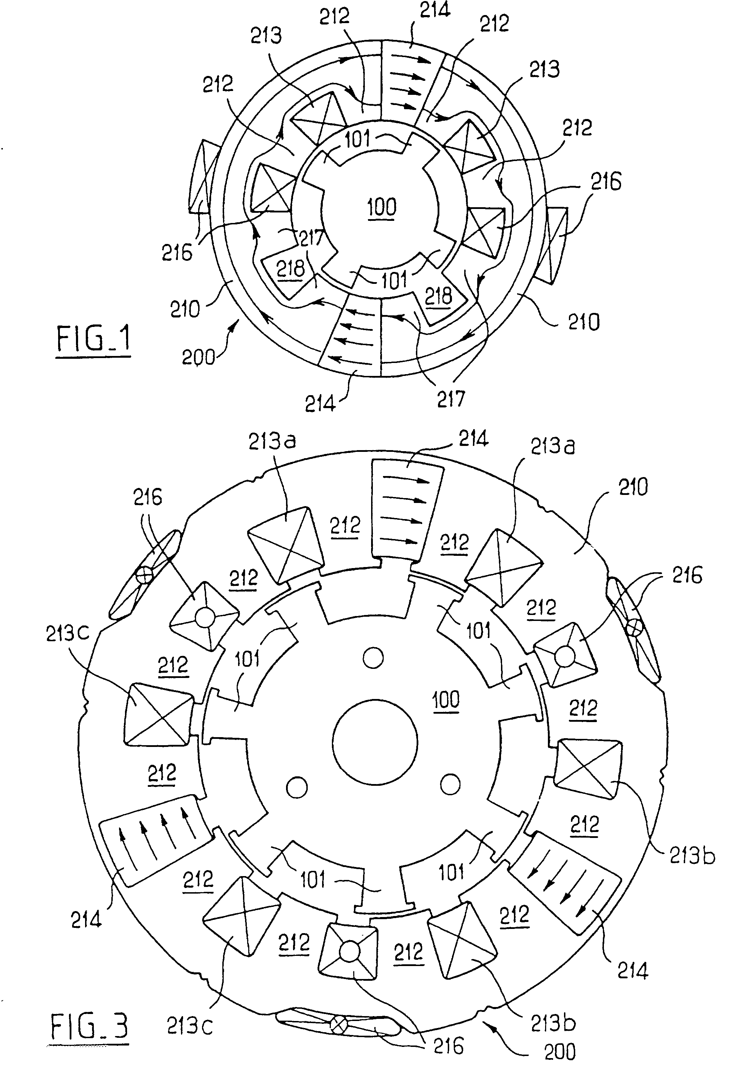

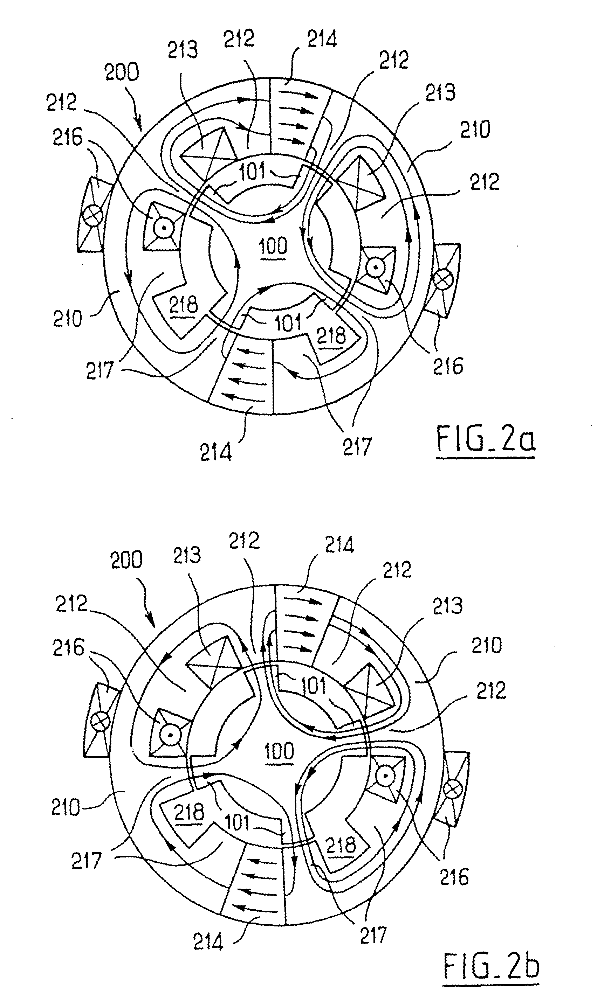

En référence tout d'abord aux figures 1, 2a et 2b, on a représenté un stator et d'un rotor pouvant équiper une machine électrique monophasée à commutation de flux selon l'invention.

Le rotor 100 comporte à sa périphérie une pluralité de dents rotoriques saillantes 101, en l'espèce au nombre de quatre, qui sont de préférence régulièrement espacées de 90° l'une par rapport à l'autre. Comme on le verra plus loin, ces dents 101 jouent un rôle de commutation de flux lorsque la machine est excitée.

Le stator 200 comporte quant à lui une carcasse annulaire 210 constituée de deux parties qui définissent, conjointement avec deux aimants permanents diamétralement opposés 214, une structure annulaire continue. A la périphérie intérieure de cette structure, et plus particulièrement dans les deux parties de la carcasse, est ménagée une pluralité d'encoches, et en l'espèce deux groupes de trois encoches, régulièrement réparties ou non. Dans le sens des aiguilles d'une montre à partir de l'un de ces aimants permanents (en l'espèce celui du haut de la figure), on trouve une dent de stator 212, une encoche recevant un brin d'un bobinage d'induit 213, une dent de stator 212, une encoche recevant un brin d'un premier bobinage d'excitation 216, une dent de stator 217, une encoche vide 218, une autre dent 217 et enfin l'aimant permanent diamétralement opposé 214. En poursuivant dans le même sens, on trouve deux autres dents 217 délimitant une autre encoche vide 218, une encoche abritant un brin d'un second bobinage d'excitation 216, et enfin deux dents 212 délimitant une encoche pour l'autre brin du bobinage d'induit 213.

Le stator comporte par ailleurs sur sa périphérie extérieure les deux autres brins des bobinages d'excitation, ceux-ci étant conçus pour engendrer un flux magnétique essentiellement tangentiel dans la carcasse 210 du rotor 200.

De même, l'orientation N/S des aimants permanents est telle qu'ils engendrent un flux magnétique essentiellement circonférentiel dans la carcasse, dans le sens des aiguilles d'une montre sur la figure 1.

La figure 1 illustre la situation où les bobinages d'excitation 216 ne sont alimentés par aucun courant.

Le fait que le stator soit fermé sur lui-même fait que les deux aimants 214 engendrent des lignes de champ essentiellement circulaires, tournant autour du stator.

Il en résulte que aucune partie de ce champ ne va circuler à travers le rotor 100 (ou seulement une partie négligeable), et ce quelle que soit la position angulaire du rotor, si bien qu'aucun courant (sauf un courant négligeable) ne va être engendré dans le bobinage d'induit 213.

L'excitation de la machine est donc nulle.

Si maintenant (voir figures 2a et 2b) un courant unidirectionnel est amené à circuler dans les bobinages d'excitation de manière à engendrer un flux magnétique dans le sens opposé à celui créé par les aimants 214, alors les flux opposés vont avoir tendance, à chaque fois que cela est possible, à se détourner via les dents 101 du rotor 100.

Ainsi la figure 2a illustre le cas où les quatre dents 101 du rotor sont positionnées comme suit, dans le sens des aiguilles d'une montre :
- l'une au droit de la dent de stator 212 séparant l'aimant supérieur 214 d'un brin du bobinage d'induit 213;
- une seconde au droit d'une dent de stator 217 séparant le brin intérieur de l'un des bobinages d'excitation 216 d'une encoche vide 218;
- une troisième au droit d'une dent 217 séparant l'aimant inférieur 214 de l'autre encoche vide 218;
- enfin une quatrième au droit d'une dent 212 séparant le brin intérieur de l'autre bobinage d'excitation 216 de l'autre brin du bobinage d'induit 213.

On observe que les lignes de champ se dirigent alors majoritairement à travers les dents 101 du rotor, qui créent quatre circuits magnétiques fermés. Dans la position de la figure 2a, deux de ces champs tournent dans des sens inverses l'un par rapport à l'autre et circonscrivent respectivement les deux brins du bobinage d'induit 213, en rentrant dans le rotor entre ces deux brins. Ces deux circuits magnétiques sont excités respectivement par l'aimant permanent supérieur 214 et par le bobinage d'induit 216 situé à droite sur la figure 2a.

Il en résulte qu'un courant d'induit d'un certain signe va être engendré.

La figure 2b illustre la situation où le rotor 100 a effectué, par rapport au cas de la figure 2a, une révolution sur 2π/8, soit 45°. On observe que dans ce cas le flux magnétique passe entre les deux brins du bobinage d'induit 213 dans la direction sortant du rotor, pour engendrer un courant d'induit de signe opposé.

Ainsi, lors de la rotation du rotor, on engendre au niveau de l'induit un courant d'induit alternatif, essentiellement sinusoïdal, dont la valeur moyenne est nulle ou essentiellement nulle.

On comprend que la valeur efficace de ce courant alternatif dépend de l'amplitude du champ magnétique créé par les bobinages d'excitation 216, pour varier entre une valeur sensiblement nulle et une valeur maximale.

On notera ici que la valeur maximale du champ magnétique dans les bobinages d'excitation n'a pas à être précisément corrélée à la puissance des aimants permanents, en étant simplement choisie pour que les aimants permanents 214 restent aptes à faire obstacle à tout champ inverse significatif.

On va maintenant décrire en référence à la figure 3 un exemple de réalisation d'une machine polyphasée selon la présente invention.

Cette machine, en l'espèce triphasée, comprend un stator 210 continu en direction circonférentielle, réalisé de façon conventionnelle par empilage de tôles. Ce stator possède douze encoches de profondeurs inégales mais réparties angulairement de façon essentiellement régulière, ces encoches étant délimitées deux à deux par douze dents 212.

On trouve dans les différentes encoches, dans le sens des aiguilles d'une montre à partir de l'encoche supérieure sur la figure 3 :
- un premier aimant permanent 214;
- un brin d'un premier bobinage d'induit 213a;
- un brin d'un premier bobinage d'excitation 216;
- un brin d'un second bobinage d'induit 213b;
- un second aimant permanent 214;
- l'autre brin du second bobinage d'induit 213b;
- un brin d'un second bobinage d'excitation 216;
- un brin d'un troisième bobinage d'induit 213c;
- un troisième aimant permanent 214;
- l'autre brin du troisième bobinage d'induit 213c;
- un brin d'un troisième bobinage d'excitation 216; et
- l'autre brin du premier bobinage d'induit 213a.

Les trois aimants permanents sont reçus dans des encoches dont la profondeur est seulement légèrement inférieure à l'épaisseur du stator en direction radiale, ceci afin de minimiser l'établissement de champs inverses dans le stator à leur niveau lorsqu'une excitation est produite. En revanche, les encoches recevant les bobinages d'excitation et les bobinages d'induit sont moins profondes,

En outre, les trois bobinages d'excitation 216 possèdent respectivement des seconds brins ménagés dans des renfoncements formés à la périphérie extérieure de la carcasse de stator, de manière à engendrer des flux d'excitation essentiellement tangentiels.

Ainsi la machine présente une symétrie angulaire de 120°, la même structure étant reproduite dans trois intervalles angulaires de 120° chacun.

On comprend que les trois bobinages d'induit 213a, 213b et 213c constituent les trois phases du stator.

Afin que la rotation du rotor 100 produise les déphasages électriques souhaités de 120° au niveau de ces trois phases, le rotor possède un nombre et une répartition de dents choisis de telle manière qu'au niveau de chacune des trois phases respectives, la position de paires de dents soit différente, avec les décalages angulaires appropriés.

Ceci est obtenu avantageusement en prévoyant au rotor sept dents de commutation de flux 101 régulièrement espacées les unes des autres de 2π/7. D'autres répartitions peuvent également être envisagées.

On observera également que la largeur des dents est sensiblement identique à celle des dents 212 séparant les différentes encoches du stator.

Par ailleurs, les trois bobinages d'excitation 216 sont branchés, en série ou de préférence en parallèle, sur la même source d'excitation.

La machine de la figure 3 opère selon le même principe que celle des figures 1, 2a et 2b.

En particulier, lorsqu'aucune excitation n'est appliquée au niveau des bobinages 216, les trois aimants permanents 214 coopèrent pour produire un flux magnétique circulant pratiquement seulement dans le stator, et les bobinages de phases 213a à 213c délivrent donc un courant sensiblement nul.

En revanche, l'établissement d'une excitation dans le sens inverse du champ créé par les aimants permanents provoque des phénomènes de bouclage de champs autour des différents brins des bobinages de phases, ces bouclages étant commutés par les dents 101 du rotor 100 de façon déphasée les uns par rapport aux autres, de telle sorte que la machine engendre lors de la rotation du rotor un courant alternatif triphasé, dont la valeur moyenne est nulle et dont la valeur efficace varie sensiblement entre zéro et une valeur maximale lorsque l'on fait varier le courant d'excitation entre zéro et une valeur d'excitation maximale.

On observera pour terminer que les machines des figures 1 à 3 peuvent le cas échéant être soumises à une magnétisation initiale ou à une remagnétisation.

Plus précisément, si les aimants 214 sont montés dans le stator sans avoir été préalablement magnétisés, il suffit d'alimenter les bobinages d'excitation 216 sous un courant inverse du courant d'excitation, alors on crée dans le stator un champ magnétique circonférentiel de même sens que celui produit par les aimants permanents, et ce champ est capable de magnétiser ou de remagnétiser les aimants. Cet établissement d'un champ inverse de magnétisation ou de remagnétisation peut être effectué par exemple à l'aide de moyens de commutation à semi-conducteurs, que l'homme du métier saura mettre au point sans difficulté.

Cette opération peut être effectuée soit à bord du véhicule, avec l'énergie électrique fournie par la batterie, soit en atelier dans le cadre d'une opération d'entretien.

Bien entendu, la présente invention n'est nullement limitée aux formes de réalisation décrites et représentées.

En particulier, on peut réaliser à partir des enseignements qui précédent des machines fonctionnant aussi bien en génératrice qu'en moteur, tel que par exemple un alterno-démarreur de véhicule automobile, et des machines possédant un nombre de phases quelconque.

## Revendications

1. Machine électrique comportant un stator (200) et un rotor (100), le stator comportant sur sa face interne au moins un bobinage d'induit (213; 213a-213c) logé dans une paire d'encoches, et comportant en outre une série de logements pour des moyens d'excitation, le rotor étant dépourvu de bobinage et comportant une pluralité de dents (101) aptes à sélectivement établir des flux magnétiques variables dans les bobinages d'induits, et les moyens d'excitation comprenant au moins un aimant permanent (214) apte à établir un flux magnétique se bouclant sur lui même dans une direction circonférentielle du stator et au moins un bobinage d'excitation (216) apte à établir localement un flux magnétique réglable dans une direction circonférentielle inverse de celle du flux produit par le ou les aimants, les dents (101) de rotor étant agencées de façon à effectuer au niveau du stator une commutation de flux, machine **caractérisée en ce que** le ou chaque aimant permanent (214) occupe une position angulaire située entre les positions angulaires des deux brins d'un même bobinage d'induit (213 ; 213a-213c), de manière à engendrer dans le ou les bobinages d'induit lors de la rotation du rotor un flux magnétique alternatif.

2. Machine selon la revendication 1, **caractérisée en ce que** le stator comporte le long de sa périphérie une alternance d'une pluralité d'aimants permanents (214) et de bobinages d'excitation (216).

3. Machine selon l'une des revendications 1 et 2, **caractérisée en ce que** le ou chaque aimant permanent (214) s'étend sensiblement sur toute la dimension radiale du stator (200).

4. Machine selon la revendication 3, **caractérisé en ce que** le stator comporte une carcasse unique (210) dans laquelle est prévue une encoche profonde en association avec le ou chaque aimant permanent (214).

5. Machine selon la revendication 3, **caractérisée en ce que** le stator comporte plusieurs parties de carcasse (210) réunies les unes aux autres par plusieurs aimants permanents (214).

6. Machine selon l'une des revendications 1 à 5, **caractérisée en ce que** le ou chaque bobinage d'excitation (216) est disposé dans deux encoches prévues respectivement dans la surface interne et dans la surface externe du stator (200).

7. Machine selon l'une des revendications 1 à 6, **caractérisée en ce qu'**elle comprend un même nombre d'aimants permanents (214), de bobinages d'excitation (216) et de bobinages d'induit (213a-213c), régulièrement répartis sur la circonférence du stator (200).

8. Machine selon la revendication 7, **caractérisée en ce que** les dents de commutation du flux (101) du rotor (100) présentent une répartition angulaire différente de celle des bobinages d'induit (213a-213c), de manière à opérer avec des courants polyphasés dans les différents bobinages d'induits.

9. Machine selon l'une des revendications 1 à 8, **caractérisée en ce qu'**elle comprend des moyens pour établir à l'aide du ou des bobinages d'excitation (216) un champ magnétique inverse de magnétisation ou de remagnétisation du ou des aimants permanents (214).

10. Machine selon l'une des revendications 1 à 9, **caractérisée en ce qu'**elle constitue un alternateur de véhicule automobile.

## Patentansprüche

1. Elektrische Maschine, die einen Ständer (200) und einen Läufer (100) umfaßt, wobei der Ständer auf seiner Innenseite wenigstens eine in einem Nutenpaar aufgenommene Ankerwicklung (213; 213a-213c) enthält, und außerdem eine Reihe von Aufnahmen für Erregermittel umfaßt, wobei der Läufer ohne Wicklung ausgeführt ist und eine Mehrzahl von Zähnen (101) enthält, die wahlweise veränderliche Magnetflüsse in den Ankerwicklungen herstellen können, und wobei die Erregermittel wenigstens einen Permanentmagneten (214), der einen Magnetfluß herstellen kann, der in einer Umfangsrichtung des Ständers in sich geschlossen ist, und wenigstens eine Erregerwicklung (216) umfassen, die örtlich einen regelbaren Magnetfluß in einer Umfangsrichtung herstellen kann, die zur Richtung des durch den bzw. die Magneten erzeugten Flusses entgegengesetzt ist, wobei die Läuferzähne (201) so angeordnet sind, daß sie in Höhe des Ständers eine Flußumschaltung herbeiführen, **dadurch gekennzeichnet, daß** der bzw. jeder Permanentmagnet (214) eine Winkelposition einnimmt, die sich zwischen den Winkelpositionen der beiden Endstücke ein und derselben Ankerwicklung (213; 213a-213c) befindet, um in der bzw. den Ankerwicklungen bei einer Drehung des Läufers einen magnetischen Wechselfluß zu erzeugen.

2. Maschine nach Anspruch 1, **dadurch gekennzeichnet, daß** der Ständer entlang seinem Umfang eine Wechselfolge einer Mehrzahl von Permanentmagneten (214) und Erregerwicklungen (216) umfaßt.

3. Maschine nach einem der Ansprüche 1 und 2, **dadurch gekennzeichnet, daß** sich der bzw. jeder Permanentmagnet (214) in etwa auf der gesamten radialen Abmessung des Ständers (200) erstreckt.

4. Maschine nach Anspruch 3, **dadurch gekennzeichnet, daß** der Ständer ein einheitliches Gestell (210) umfaßt, in dem eine tiefe Nut in Verbindung mit dem bzw. jedem Permanentmagneten (214) vorgesehen ist.

5. Maschine nach Anspruch 3, **dadurch gekennzeichnet, daß** der Ständer mehrere Gestellteile (210) umfaßt, die durch mehrere Permanentmagneten (214) miteinander verbunden sind.

6. Maschine nach einem der Ansprüche 1 bis 5, **dadurch gekennzeichnet, daß** die bzw. jede Erregerwicklung (216) in zwei Nuten angeordnet ist, die in der Innenfläche bzw. in der Außenfläche des Ständers (200) vorgesehen sind.

7. Maschine nach einem der Ansprüche 1 bis 6, **dadurch gekennzeichnet, daß** sie eine gleiche Anzahl von Permanentmagneten (214), Erregerwicklungen (216) und Ankerwicklungen (213a-213c) umfaßt, die gleichmäßig auf dem Umfang des Ständers (200) verteilt sind.

8. Maschine nach Anspruch 7, **dadurch gekennzeichnet, daß** die Flußumschaltzähne (101) des Läufers (100) eine Winkelverteilung aufweisen, die von derjenigen der Ankerwicklungen (213a-213c) verschieden ist, um mit Mehrphasenströmen in den verschiedenen Ankerwicklungen zu arbeiten.

9. Maschine nach einem der Ansprüche 1 bis 8, **dadurch gekennzeichnet, daß** sie Mittel umfaßt, um mit Hilfe der Erregerwicklung bzw. der Erregerwicklungen (216) ein entgegengesetztes Magnetfeld zur Magnetisierung oder Aufmagnetisierung des bzw. der Permanentmagneten (214) herzustellen.

10. Maschine nach einem der Ansprüche 1 bis 9, **dadurch gekennzeichnet, daß** sie einen Wechselstromgenerator für Kraftfahrzeuge bildet.

## Claims

1. An electrical machine having a stator (200) and a rotor (100), the stator comprising, on its inner face, at least one armature winding (213; 213a - 213c) lodged within a pair of slots, and further including a set of housings for excitation means, the rotor being without any winding and comprising a plurality of teeth (101) which are adapted so as selectively to establish variable magnetic fluxes in the armature windings, and the excitation means comprising at least one permanent magnet (214) adapted to establish a magnetic flux looped on itself in a circumferential direction of the stator, together with at least one excitation winding (216) which is adapted to establish an adjustable local magnetic flux in a circumferential direction which is inverse to that of the flux produced by the magnet or magnets, the teeth (101) of the rotor being so arranged as to effect switching of the flux in the region of the stator, the machine being **characterised in that** the or each permanent magnet (214) occupies an angular position which is situated between the angular positions of the two ends of one armature winding (213; 213a - 213c), whereby to set up an alternating magnetic flux in the armature winding or windings during rotation of the rotor.

2. A machine according to Claim 1, **characterised in that** the stator includes, along its periphery, a plurality of permanent magnets (214) arranged alternately with excitation windings (216).

3. A machine according to Claim 1 or Claim 2, **characterised in that** the or each permanent magnet (214) extends over substantially the whole radial dimension of the stator (200).

4. A machine according to Claim 3, **characterised in that** the stator comprises a single carcass (210), in which a deep slot is provided in association with the or each permanent magnet (214).

5. A machine according to Claim 3, **characterised in that** the stator comprises a plurality of carcass portions (210) which are joined together by a plurality of permanent magnets (214).

6. A machine according to one of Claims 1 to 5, **characterised in that** the or each excitation winding (216) is disposed in two slots which are arranged, respectively, in the inner surface and in the outer surface of the stator (200).

7. A machine according to one of Claims 1 to 6, **characterised in that** it has the same number of permanent magnets (214) as it has of excitation windings (216) and as it has of armature windings (213a - 213c), which are regularly spaced apart over the circumference of the stator (200).

8. A machine according to Claim 7, **characterised in that** the flux switching teeth (101) of the rotor (100) are spaced apart in an angular distribution which is different from that of the armature windings (213a - 213c), whereby to operate with polyphase currents in the various armature windings.

9. A machine according to one of Claims 1 to 8, **characterised in that** it includes means for establishing, with the aid of the excitation winding or windings (216), an inverse magnetic field for magnetising or remagnetising the permanent magnet or magnets (214).

10. A machine according to one of Claims 1 to 9, **characterised in that** it is a motor vehicle alternator.
